(19) Europäisches Patentamt
European Patent Office
Office européen des brevets

(11) Veröffentlichungsnummer: **0 444 554 A2**

(12) # EUROPÄISCHE PATENTANMELDUNG

(21) Anmeldenummer: **91102698.7**

(51) Int. Cl.5: **C08G 65/32**

(22) Anmeldetag: **23.02.91**

(30) Priorität: **02.03.90 DE 4006491**

(43) Veröffentlichungstag der Anmeldung:
**04.09.91 Patentblatt 91/36**

(84) Benannte Vertragsstaaten:
**BE DE DK FR GB IT NL**

(71) Anmelder: **HOECHST AKTIENGESELLSCHAFT**
**Postfach 80 03 20**
**W-6230 Frankfurt am Main 80(DE)**

(72) Erfinder: **Meyer, Matthias, Dr.**
**Platanenstrasse 12**
**W-6230 Frankfurt am Main(DE)**
Erfinder: **Stapel, Ralf, Dr.**
**Frankfurter Strasse 95**
**W-6233 Kelkheim/Taunus(DE)**
Erfinder: **Kottmann, Hariolf, Dr.**
**Am alten Birnbaum 6**
**W-6238 Hofheim am Taunus(DE)**
Erfinder: **Gries, Thomas, Dr.**
**Johannesallee 18**
**W-6230 Frankfurt am Main(DE)**

(54) **Verfahren zur Herstellung von perfluorierten Ethern.**

(57) Die Erfindung betrifft ein Verfahren zur Herstellung von perfluorierten Ethern der Formel (I)

$$F_3C(CF_2)_2\text{-}O\text{-}(CF(CF_3)CF_2\text{-}O)_n\ CHFCF_3 \qquad (I)$$

wobei n eine ganze Zahl von 10 bis 60 bedeutet,
aus Verbindungen der Formel (II)

$$F_3C(CF_2)_2\text{-}O\text{-}(CF(CF_3)CF_2\text{-}O)_n\ CF(CF_3)COF \qquad (II)$$

wobei n die obige Bedeutung hat, durch Umsetzung mit Alkalimetallhydroxid in Abwesenheit von Lösungsmitteln bei Temperaturen von 90 bis 160 °C.

EP 0 444 554 A2

Die Erfindung betrifft ein Verfahren zur Herstellung von perfluorierten Ethern der Formel (I)

$$F_3C(CF_2)_2\text{-}O\text{-}(\text{-}CF(CF_3)CF_2\text{-}O\text{-})_n\ CHFCF_3 \qquad (I)$$

wobei n eine ganze Zahl von 10 bis 60 bedeutet, aus Verbindungen der Formel (II)

$$F_3C(CF_2)_2\text{-}O\text{-}(CF(CF_3)CF_2\text{-}O\text{-})_n\ CF(CF_3)COF \qquad (II)$$

wobei n die obige Bedeutung hat.

Perfluorierte Polyether sind hochstabile, nicht entflammbare Öle. Selbst gegenüber starken Oxidationsmitteln und hohen Temperaturen erweisen sie sich als chemisch stabil. Aufgrund ihrer chemischen und physikalischen Eigenschaften, wie günstiges Viskositätsverhalten in weiten Temperaturbereichen, zum Teil hohe Siedepunkte bei gleichzeitig niedrigen Stockpunkten, geringe Oberflächenspannung, sehr gute dielektrische Eigenschaften, ausgezeichnete Schmiereigenschaften verbunden mit einer sehr guten Verträglichkeit mit Metallen, Kunststoffen und Elastomeren, erschließen die perfluorierten Polyether ein weites Anwendungsgebiet. So werden sie z.B. als Inertflüssigkeiten, Hydrauliköle, Schmiermittel in der chemischen Verarbeitungsindustrie, der Flugzeugindustrie, der Kerntechnologie, aber auch in der Raumfahrt- und Halbleitertechnik eingesetzt.

In EP-A-154 297 ist die Herstellung von Verbindungen der Formel (I) durch Hydrolyse und Decarboxylierung von Verbindungen der Formel (II) mit wäßriger Kaliumhydroxidlösung in Ethylenglykol bei 175 °C beschrieben. Nach Extraktion und Trocknung wird das Produkt jedoch in nur 65 %iger Ausbeute erhalten.

Es wurde nun gefunden, daß man die Decarboxylierung viel günstiger mit festem Alkalihydroxid in Abwesenheit von Lösungsmitteln und bei einer geringeren Reaktionstemperatur als bei dem Verfahren gemäß EP-A-154 297 durchführen kann. Extraktion und Trocknung entfallen bei dem erfindungsgemäßen Verfahren, so daß das gewünschte Endprodukt (I) in hoher Ausbeute gewonnen werden kann.

Gegenstand der Erfindung ist ein Verfahren zur Herstellung von perfluorierten Ethern der Formel (I)

$$F_3C(CF_2)_2\text{-}O\text{-}(\text{-}CF(CF_3)CF_2\text{-}O\text{-})_n\ CHFCF_3 \qquad (I)$$

wobei n eine ganze Zahl von 10 bis 60 bedeutet,
aus Verbindungen der Formel (II)

$$F_3C(CF_2)_2\text{-}O\text{-}(CF(CF_3)CF_2\text{-}O\text{-})_n\ CF(CF_3)COF \qquad (II)$$

wobei n die obige Bedeutung hat, dadurch gekennzeichnet, daß man eine oder mehrere Verbindungen der Formel (II) mit festem Alkalimetallhydroxid in Abwesenheit von Lösungsmitteln bei Temperaturen von 90 bis 160 °C umsetzt. Als Alkalimetallhydroxid wird vorzugsweise Kaliumhydroxid und/oder Natriumhydroxid, insbesondere Kaliumhydroxid verwendet. Die Reaktionstemperatur ist vorzugsweise 110-155 °C, insbesondere 130 bis 145 °C.

Die Ausgangsverbindungen der Formel (II) sind als Oligomerisationsprodukte von Hexafluorpropylenepoxid, wie in GB-PS 1 033 574 näher beschrieben, erhältlich. Die Verbindungen der Formel (II) fallen dabei im allgemeinen als Gemische mit einer Molmassenverteilung von ca. 1000 - 20000 g $mol^{-1}$ an.

Beim erfindungsgemäßen Verfahren können die so erhaltenen Ausgangsverbindungen der Formel (II) im allgemeinen ohne Vorreinigung eingesetzt werden. Dazu werden sie im allgemeinen mit 0,8 bis 1,5 mol, vorzugsweise mit 0,9-1,1 mol, insbesondere mit einer etwa äquimolaren Menge an festem Kaliumhydroxid versetzt. Dieses wird im allgemeinen in gepulverter Form eingesetzt.

Der Verlauf der Reaktion kann beispielsweise durch das Verschwinden der Absorptionsbanden bei 1680 bzw. bei 1880 $cm^{-1}$ IR-spektroskopisch verfolgt werden. Nach etwa 6-8 Stunden ist die Reaktion im allgemeinen beendet.

Die Ausbeute an perfluorierten Ethern der Formel (I) liegt in der Regel über 90 %. Eine Veränderung der Verteilung der Molekulargewichte während der Reaktion ist gelpermeationsanalytisch nicht nachweisbar. Ebenso wird bei dem erfindungsgemäßen Verfahren keine Verfärbung des Reaktionsansatzes bzw. keine Zersetzung der Produkte beobachtet.

Die Produkte (I) fallen als wasserklare, farblose und je nach Molmasse mehr oder weniger viskose Flüssigkeiten an. Falls ein Gemisch von Verbindungen (II) eingesetzt wird, entsteht ein Gemisch von Produkten (I), das durch Destillation zu den gewünschten Viskositätsklassen fraktioniert werden kann.

Die erhaltenen Produkte werden beispielsweise in der Elektronik- und chemischen Industrie, sowie in der Kern-, Luft- und Raumfahrttechnik als Inertflüssigkeiten, Hydrauliköle oder Schmiermittel eingesetzt.

**Beispiele**

**Versuchsbericht zur Darstellung der Ausgangsverbindungen der Formel (II):**

Eine Lösung aus 20 g CsF in 50 ml Tetraethylenglykoldimethylether und 56 g Hexafluorpropylenoxid wurden unter Stickstoffgasatmosphäre in einem 4 l V-4-A Autoklaven vorgelegt. Zusätzlich wurden 250 ml Frigen®F113 oder ein Gemisch aus 50 ml F113 und 100 g Hexafluorpropylen (HFP) zur Verdünnung hinzugefügt. Bei einer Temperatur von -40 °C bis 0 °C wurden dann 4000 g Hexafluorpropylenoxid über einen Zeitraum von 8 h unter guter Durchmischung eingeleitet. Nach Reaktionsende wurde auf Raumtemperatur erwärmt und anschließend das Rohprodukt mit einem mittleren Molekulargewicht von 2000 - 10000 g $mol^{-1}$ unter Stickstoffgasatmosphäre abgelassen. Das mittlere Molekulargewicht der gewünschten Verbindung der Formel (II) wurde über die Reaktionstemperatur gesteuert. So wurde bei einer Temperatur von -35 °C ein Produkt mit einem mittleren Molekulargewicht von 6000 - 8000 g $mol^{-1}$ isoliert und bei einer Temperatur von 0 °C ein Produkt mit einem mittleren Molekulargewicht von ca. 2500 g $mol^{-1}$.

**Beispiel 1**

Als Ausgangsverbindung wurden 18 kg Perfluorpolyethersäurefluorid der Formel (II) mit einem mittleren Molekulargewicht von 4100 g $mol^{-1}$ (4,4 mol) in einem 20 l-Kolben auf 140 °C erhitzt. Über eine Destillationsbrücke wurden die noch vorhandenen Lösungsmittel (Frigen®F113 und HFP) abdestilliert. Mittels eines Feststoff-Dosiertrichters wurden anschließend 250 g (4,5 mol) gepulvertes, trockenes Kaliumhydroxid langsam hinzugegeben. Nach 6 stündiger Reaktionszeit war im IR-Spektrum keine C = O Bande bei 1680 und 1880 $cm^{-1}$ mehr sichtbar. Nach Abfiltrieren vom Kaliumfluorid wurden 16,1 kg reines Perfluorpolyether-Öl der Formel (I) erhalten (Ausbeute: 91 %).

**Beispiel 2**

4000 g Perfluorpolyethersäurefluorid mit einem mittleren Molekulargewicht von 2000 g $\cdot mol^{-1}$ (2,0 mol) wurden in einem 4 l-Kolben auf 130 °C erhitzt. Über eine Destillationsbrücke wurden die noch vorhandenen Lösungsmittel abdestilliert. Bei einer Temperatur von 135 °C wurden nach der Destillation 112 g (2,0 mol) gepulvertes,trockenes Kaliumhydroxid über einen Zeitraum von 1-3 h langsam hinzugegeben. Nach 3- bis 5-stündiger Reaktionszeit war die Reaktion beendet, was, wie in Beispiel 1, IR-spektroskopisch nachgewiesen wurde. Nach Abfiltrieren von Kaliumfluorid wurden 3595 g reines Perfluorpolyether-Öl erhalten (Ausbeute: 92 %).

**Beispiel 3**

4000 g Perfluorpolyethersäurefluorid mit einem mittleren Molekulargewicht von 5300 g $mol^{-1}$ (0,8 mol) wurden nach Abdestillation der Lösungsmittel wie in Beispiel 2 beschrieben mit 43 g (0,8 mol) gepulvertem, trockenem Kaliumhydroxid umgesetzt. Nach dem Abfiltrieren von Kaliumfluorid wurden 3570 g reines Perfluorpolyether-Öl erhalten (Ausbeute: 90 %).

**Beispiel 4**

4000 g Perfluorpolyethersäurefluorid mit einem mittleren Molekulargewicht von 6100 g $mol^{-1}$ (0,7 mol) wurden nach Abdestillation der Lösungsmittel wie in Beispiel 2 beschrieben mit 37 g (0,7 mol) gepulvertem, trockenem Kaliumhydroxid umgesetzt. Nach dem Abfiltrieren von Kaliumfluorid wurden 3650 g reines Perfluorpolyether-Öl erhalten (Ausbeute: 92 %).

**Beispiel 5**

4000 g Perfluorpolyethersäurefluorid mit einem mittleren Molekulargewicht von 9800 g $mol^{-1}$ (0,4 mol) wurden nach Abdestillation der Lösungsmittel wie in Beispiel 2 beschrieben mit 23 g (0,4 mol) gepulvertem, trockenem Kaliumhydroxid umgesetzt. Nach dem Abfiltrieren von Kaliumfluorid wurden 3700 g reines Perfluorpolyether-Öl erhalten (Ausbeute: 93 %).

**Patentansprüche**

1. Verfahren zur Herstellung von perfluorierten Ethern der Formel (I)

$$F_3C(CF_2)_2\text{-}O\text{-}(CF(CF_3)CF_2\text{-}O)_n\ CHFCF_3 \qquad (I)$$

wobei n eine ganze Zahl von 10 bis 60 bedeutet,
aus Verbindungen der Formel (II)

$$F_3C(CF_2)_2\text{-}O\text{-}(CF(CF_3)CF_2\text{-}O)_n\ CF(CF_3)COF' \qquad (II)$$

wobei n die obige Bedeutung hat, dadurch gekennzeichnet, daß man eine oder mehrere Verbindungen der Formel (II) mit Alkalimetallhydroxid in Abwesenheit von Lösungsmitteln bei Temperaturen von 90 bis 160 °C umsetzt.

2. Verfahren nach Anspruch 1, dadurch gekennzeichnet, daß man die Umsetzung bei 110 bis 155 °C durchführt.

3. Verfahren nach einem der Ansprüche 1 bis 2, dadurch gekennzeichnet, daß man die Umsetzung bei 130 bis 145 °C durchführt.

4. Verfahren nach einem der Ansprüche 1 bis 3, dadurch gekennzeichnet, daß man als Alkalimetallhydroxid Kaliumhydroxid und/oder Natriumhydroxid verwendet.

5. Verfahren nach einem der Ansprüche 1 bis 3, dadurch gekennzeichnet, daß man als Alkalimetallhydroxid Kaliumhydroxid verwendet.